# EUROPÄISCHE PATENTSCHRIFT

(11) **EP 3 126 873 B1**
(45) Veröffentlichungstag und Bekanntmachung des Hinweises auf die Patenterteilung: **27.06.2018**
(21) Anmeldenummer: 15726574.5
(22) Anmeldetag: 28.05.2015
(51) Int. Cl.: G01S 17/48, G01S 17/42, B60L 11/18

(54) **ORTUNGSSYSTEM ZUR BESTIMMUNG DER POSITION EINES FAHRZEUGS IN EINER LADESTATION**
POSITIONING SYSTEM FOR DETERMINING THE POSITION OF A VEHICLE IN A CHARGING STATION
SYSTÈME DE LOCALISATION PERMETTANT DE DÉTERMINER LA POSITION D'UN VÉHICULE DANS UNE STATION DE CHARGE

(30) Priorität: 05.06.2014 DE 102014210759
(43) Veröffentlichungstag der Anmeldung: 08.02.2017
(73) Patentinhaber: Siemens Aktiengesellschaft, 80333 München (DE)
(72) Erfinder: BÜHS, Florian, 10777 Berlin (DE); ROMPE, Andre, 12621 Berlin (DE)
(86) Internationale Anmeldenummer: PCT/EP2015/061788
(87) Internationale Veröffentlichungsnummer: WO 2015/185429

(56) Entgegenhaltungen:
- EP-A2- 2 692 573
- WO-A1-2009/124565
- WO-A1-2012/049438
- WO-A2-2011/139680
- US-A- 5 903 355

## Beschreibung

Die Erfindung bezieht sich auf ein Ortungssystem zur Bestimmung der Position eines Fahrzeugs beim Einfahren in eine Ladestation, die zum Aufladen eines Energiespeichers des Fahrzeugs geeignet ist.

Bekanntermaßen können elektrische Energiespeicher von Hybridfahrzeugen oder von ausschließlich elektrisch angetriebenen Fahrzeugen, wie beispielsweise von Bussen des öffentlichen Nahverkehrs, an entsprechend ausgestatteten Haltestellen, nachfolgend Ladestationen genannt, aufgeladen werden. Um den Ladevorgang automatisiert durchführen zu können, sollte die Position des Fahrzeugs innerhalb der Ladestation möglichst genau bekannt sein.

Der Erfindung liegt demgemäß die Aufgabe zugrunde, ein Ortungssystem anzugeben, das zur Bestimmung der Position eines Fahrzeugs innerhalb einer Ladestation, insbesondere zur Bestimmung der Position beim Einfahren des Fahrzeugs in die Ladestation, geeignet ist und mit dem sich eine Ortsbestimmung besonders einfach, aber dennoch sehr genau durchführen lässt. Diese Aufgabe wird erfindungsgemäß durch ein Ortungssystem mit den Merkmalen gemäß Patentanspruch 1 gelöst. Vorteilhafte Ausgestaltungen des erfindungsgemäßen Ortungssystems sind in Unteransprüchen angegeben.

Ein Ortungssystem gemäß Oberbegriff von Patentanspruch 1 ist in Dokumenten EP 2692573 A2 und WO 2011/139680 A2 offenbart. Danach ist erfindungsgemäß vorgesehen, dass das Ortungssystem fahrzeugseitig eine Markierung aufweist, bei der sich zumindest eine Markierungseigenschaft in Fahrzeuglängsrichtung ändert, und die Ortungseinrichtung streckenseitig, insbesondere ladestationsseitig, eine Sensoreinrichtung aufweist, die - beim Vorbeifahren des Fahrzeugs an der Sensoreinrichtung, insbesondere beim Einfahren des Fahrzeugs in die Ladestation - den Abstand der Markierung von der Sensoreinrichtung misst und ein Abstandssignal erzeugt, das den Abstand der Markierung von der Sensoreinrichtung in Fahrzeugquerrichtung angibt, und die Markierungseigenschaft in Fahrzeuglängsrichtung ausliest und ein Fahrzeuglängsrichtungssignal erzeugt, das die Position der Markierung und/oder des Fahrzeugs relativ zur Sensoreinrichtung in Fahrzeuglängsrichtung angibt.

Ein wesentlicher Vorteil des erfindungsgemäßen Ortungssystems ist darin zu sehen, dass eine Bestimmung der Position des Fahrzeugs innerhalb der Ladestation sowohl in Fahrzeuglängsrichtung als auch in Fahrzeugquerrichtung anhand einer Markierung ermittelt werden kann, bei der sich eine Markierungseigenschaft allein in Fahrzeuglängsrichtung ändert. Vorzugsweise wird die fahrzeuglängsrichtungsabhängige Markierungseigenschaft durch die Oberflächentopologie oder zumindest auch durch die Oberflächentopologie der Markierung bestimmt. Die fahrzeuglängsrichtungsabhängige Markierungseigenschaft wird durch das Oberflächenprofil der Markierung in Fahrzeug-Y-Richtung bestimmt und das Fahrzeuglängsrichtungssignal wird durch Auswertung des Abstandssignals erzeugt. Bei dieser Ausgestaltung dient das Abstandssignal mit anderen Worten zur Erzeugung eines zweidimensionalen Positionssignals. Die Oberflächentopologie der Markierung weist in Fahrzeug-Y-Richtung entlang der Fahrzeug-X-Richtung eine Höhenkodierung auf, anhand derer die Position der Markierung in Fahrzeug-X-Richtung relativ zur Sensoreinrichtung feststellbar ist.

Die Oberflächentopologie der Markierung ist um eine Biegeachse, die der Fahrzeuglängsachse entspricht oder parallel zur Fahrzeuglängsachse liegt, gebogen. Bei einer solchen Ausgestaltung ist eine zuverlässige Markierungserkennung auch noch möglich, wenn sich das Fahrzeug neigt, beispielsweise um bei Fahrzeugstillstand das Einsteigen von Passagieren zu erleichtern.

Vorzugsweise weist die fahrzeuglängsrichtungsabhängige Markierungseigenschaft der Markierung an dem in Vorwärtsfahrtrichtung des Fahrzeugs gesehen vorderen Markierungsende ein Startmerkmal oder eine Startsequenz auf, anhand derer die Sensoreinrichtung den Beginn des Vorbeifahrens der Markierung erkennt.

Eine besonders einfache Markierung kann in vorteilhafter Weise durch eine Loch- und/oder Schlitzblende, die ein oder mehrere Löcher und/oder Schlitze enthält, gebildet sein oder eine solche Loch- und/oder Schlitzblende zumindest auch enthalten.

Die Markierung kann in vorteilhafter Weise darüber hinaus eine Kodierung aufweisen, die das Fahrzeug identifiziert. Im Falle einer solchen Ausgestaltung erkennt die Sensoreinrichtung vorzugsweise anhand der Kodierung das Fahrzeug.

Die Sensoreinrichtung ist vorzugsweise eine berührungslos arbeitende Sensoreinrichtung. Bevorzugt arbeitet die Sensoreinrichtung optisch, induktiv, magnetisch und/oder kapazitiv.

Als besonders vorteilhaft wird es angesehen, wenn die Sensoreinrichtung den Abstand zwischen der Markierung und der Sensoreinrichtung mittels eines Triangulationsverfahrens, insbesondere eines Lasertriangulationsverfahrens, oder mittels eines Strahlungslaufzeitverfahrens bestimmt.

Die Erfindung bezieht sich darüber hinaus auf eine Ladestation, die zum Aufladen eines Energiespeichers eines Fahrzeugs geeignet ist. Bezüglich einer solchen Ladestation ist erfindungsgemäß vorgesehen, dass die Ladestation eine Sensoreinrichtung aufweist, die beim Einfahren des Fahrzeugs in die Ladestation den Abstand einer fahrzeugseitigen Markierung von der Sensoreinrichtung misst und ein Abstandssignal erzeugt, das den Abstand der Markierung von der Sensoreinrichtung in Fahrzeugquerrichtung angibt, und eine Markierungseigenschaft in Fahrzeuglängsrichtung ausliest und ein Fahrzeuglängsrichtungssignal erzeugt, das die Position der Markierung und/oder des Fahrzeugs relativ zur Sensoreinrichtung in Fahrzeuglängsrichtung angibt.

Bezüglich der Vorteile der erfindungsgemäßen Ladestation sei auf die obigen Erläuterungen im Zusammenhang mit dem erfindungsgemäßen Ortungssystem verwiesen, da die Vorteile des erfindungsgemäßen Ortungssystems denen der erfindungsgemäßen Ladestation im Wesentlichen entsprechen.

Die Erfindung bezieht sich darüber hinaus auf ein Fahrzeug, das zumindest auch einen Elektroantrieb und einen Energiespeicher aufweist, der über eine Ladestation aufladbar ist. Bezüglich eines solchen Fahrzeugs ist erfindungsgemäß vorgesehen, dass das Fahrzeug eine fahrzeugseitige Markierung mit einer fahrzeuglängsrichtungsabhängigen Markierungseigenschaft aufweist, anhand derer ein Fahrzeuglängsrichtungssignal, das die Position der Markierung und/oder des Fahrzeugs relativ zu einer Sensoreinrichtung der Ladestation in Fahrzeuglängsrichtung angibt, und ein Abstandssignal, das den Abstand der Markierung und/oder des Fahrzeugs von der Sensoreinrichtung in Fahrzeugquerrichtung angibt, erzeugt werden kann.

Bezüglich der Vorteile des erfindungsgemäßen Fahrzeugs sei auf die obigen Erläuterungen im Zusammenhang mit dem erfindungsgemäßen Ortungssystem verwiesen.

Die Erfindung bezieht sich darüber hinaus auf ein Verfahren zum Bestimmen der Position eines Fahrzeugs beim Einfahren in eine Ladestation, die zum Aufladen eines Energiespeichers des Fahrzeugs geeignet ist. Erfindungsgemäß ist bezüglich eines solchen Verfahrens vorgesehen, dass beim Vorbeifahren des Fahrzeugs an einer Sensoreinrichtung der Ladestation der Abstand einer fahrzeugseitigen Markierung von der Sensoreinrichtung der Ladestation in Fahrzeugquerrichtung gemessen wird und ein Abstandssignal erzeugt wird, das den Abstand der Markierung und/oder des Fahrzeugs von der Sensoreinrichtung der Ladestation in Fahrzeugquerrichtung angibt, und eine fahrzeuglängsrichtungsabhängige Markierungseigenschaft der fahrzeugseitigen Markierung ausgelesen wird und ein Fahrzeuglängsrichtungssignal erzeugt wird, das die Position der Markierung und/oder des Fahrzeugs relativ zur Sensoreinrichtung der Ladestation in Fahrzeuglängsrichtung angibt.

Bezüglich der Vorteile des erfindungsgemäßen Verfahrens sei auf die obigen Erläuterungen im Zusammenhang mit dem erfindungsgemäßen Ortungssystem verwiesen.

Als besonders vorteilhaft wird es angesehen, wenn die fahrzeuglängsrichtungsabhängige Markierungseigenschaft durch das Oberflächenprofil der Markierung in Fahrzeug-Y-Richtung bestimmt wird und das Fahrzeuglängsrichtungssignal durch Auswertung des Abstandssignals erzeugt wird.

Die Erfindung wird nachfolgend anhand von Ausführungsbeispielen näher erläutert; dabei zeigen beispielhaft:
- Figur 1: ein Ausführungsbeispiel für eine erfindungsgemäße Ladestation, in die ein mit einer Markierung ausgestattetes Fahrzeug einfährt,
- Figur 2: ein Ausführungsbeispiel für eine erfindungsgemäße Ladestation, in die ein mit einer Markierung ausgestattetes Fahrzeug einfährt, wobei eine Sensoreinrichtung zusätzlich eine Identifikation des einfahrenden Fahrzeugs vornimmt,
- Figur 3: ein Ausführungsbeispiel für eine erfindungsgemäße Ladestation, in die ein mit einer - verglichen mit den Markierungen gemäß den Figuren 1 und 2-einfacheren Markierung ausgestattetes Fahrzeug einfährt, und
- Figur 4: ein Ausführungsbeispiel für eine erfindungsgemäße Ladestation, bei der eine Sensoreinrichtung mit zwei in Fahrzeuglängsrichtung versetzt angeordneten Sensoren ausgestattet ist.

In den Figuren werden der Übersicht halber für identische oder vergleichbare Komponenten stets dieselben Bezugszeichen verwendet.

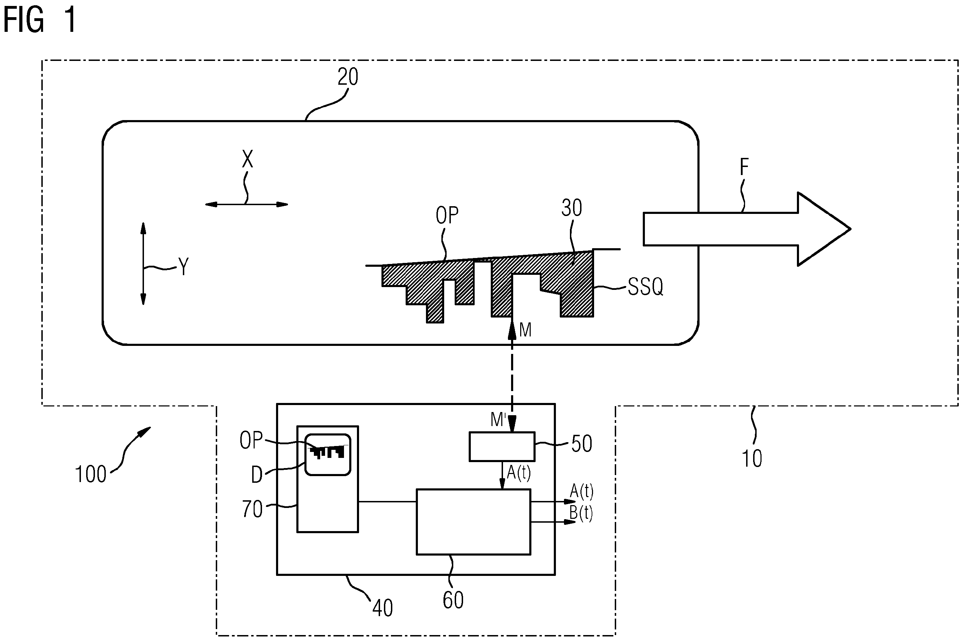

Die Figur 1 zeigt eine Ladestation 10, in die ein Fahrzeug 20 entlang einer für die Ladestation 10 vorgegebenen Fahrtrichtung F einfährt. Das Fahrzeug 20 ist mit einer Markierung 30 versehen, bei der sich eine Markierungseigenschaft in Fahrzeuglängsrichtung X ändert. Bei dem Ausführungsbeispiel gemäß Figur 1 weist die Markierung 30 eine Oberflächentopologie bzw. ein Oberflächenprofil OP auf, dessen - entlang der Fahrzeugquerrichtung bzw. der Fahrzeug-Y-Richtung gesehen - Höhe sich entlang der Fahrzeuglängsrichtung X ändert und somit mathematisch eine Funktion OP(X) der Längskoordinate X darstellt.

Die Markierung 30 kann beispielsweise auf dem Fahrzeugdach des Fahrzeugs 20, an der - in Fahrtrichtung F gesehen - rechten Seitenwand des Fahrzeugs oder auch im Bereich des Fahrzeugbodens des Fahrzeugs 20 angeordnet sein.

Zur Ortung des Fahrzeugs 20 innerhalb der Ladestation 10 ist die Ladestation 10 mit einer Sensoreinrichtung 40 ausgestattet, die einen Sensor 50, eine Recheneinrichtung 60 sowie einen Speicher 70 umfasst.

Der Sensor 50 arbeitet vorzugsweise berührungslos, beispielsweise optisch, induktiv, magnetisch und/oder kapazitiv. Beispielsweise kann es sich bei dem Sensor 50 um einen laserbasierten Sensor handeln, der den Abstand zwischen dem Sensor 50 und der fahrzeugseitigen Markierung 30 mittels eines Triangulationsverfahrens, insbesondere eines Lasertriangulationsverfahrens, oder mittels eines Laserstrahlungslaufzeitverfahrens bestimmt.

In der Figur 1 ist die Arbeitsweise des Sensors 50 mittels eines Messstrahls M angedeutet, der von dem Sensor 50 Richtung Fahrzeug 20 gestrahlt wird, von der Markierung 30 zumindest teilweise reflektiert wird und als reflektierter Messstrahl M' zurück zum Sensor 50 gelangt.

Die Ladestation 10 bzw. deren Sensoreinrichtung 40 kann beispielsweise wie folgt betrieben werden:
Fährt das Fahrzeug 20 entlang der Fahrtrichtung F in die Ladestation 10 ein, so wird der Sensor 50 anhand des reflektierten Messstrahls M' das Auftreten der Markierung 30 erkennen und ein Abstandssignal A(t) erzeugen, das den Abstand der Markierung 30 von dem Sensor 50 bzw. von der Sensoreinrichtung 40 angibt.

Das Abstandssignal A(t) gelangt zu der Recheneinrichtung 60, die den zeitlichen Verlauf des Abstandssignals A(t) auswertet. Hierzu liest die Recheneinrichtung 60 aus dem Speicher 70 einen Datensatz D aus, der das horizontale Oberflächenprofil OP der geometrischen Markierung 30 mathematisch beschreibt.

Anhand des Datensatzes D bzw. anhand des ausgelesenen Oberflächenprofils OP sowie anhand des zeitlichen Verlaufs des Abstandssignals A(t) kann die Recheneinrichtung 60 bestimmen, an welcher Stelle auf dem Oberflächenprofil OP sich der Messstrahl M zu jedem Zeitpunkt befindet. Mit anderen Worten ist die Recheneinrichtung 60 also in der Lage, ein Fahrzeuglängsrichtungssignal zu erzeugen, das die Position der Markierung 30 in Fahrzeuglängsrichtung relativ zum Messstrahl M und damit relativ zum Sensor 50 bzw. der Sensoreinrichtung 40 angibt. Das Fahrzeuglängsrichtungssignal ist in der Figur 1 mit dem Bezugszeichen B(t) gekennzeichnet.

In der Sensoreinrichtung 40 bzw. in der Recheneinrichtung 60 liegen somit zwei Ortsangaben vor, nämlich das Abstandssignal A(t) sowie das Fahrzeugslängsrichtungssignal B(t), die beide gemeinsam die zweidimensionalen Raumkoordinaten der Markierung 30 innerhalb der Ladestation 10 bezogen auf die Position der Sensoreinrichtung 40 angeben.

Da die Positionierung der Markierung 30 am bzw. auf dem Fahrzeug 20 vorab bekannt ist und vorzugsweise ebenfalls in dem Datensatz D des Speichers 70 oder in einem anderen Datensatz des Speichers 70 hinterlegt ist und da auch die Positionierung der Sensoreinrichtung 40 innerhalb der Ladestation 10 bekannt ist, kann die Recheneinheit 60 zusätzlich oder alternativ zu dem Abstandssignal A(t) und dem Fahrzeuglängsrichtungssignal B(t) auch Ortungssignale erzeugen, die die Positionierung der Markierung 30 bzw. anderer Stellen des Fahrzeugs 20 relativ zur Sensoreinrichtung 40 und/oder relativ zu anderen Referenzpunkten innerhalb der Ladestation 10 beschreiben.

Mit anderen Worten ist die Sensoreinrichtung 40 bei dem Ausführungsbeispiel gemäß Figur 1 in der Lage, ausschließlich anhand eines einzigen Messsignals, nämlich des Abstandssignals A(t), das des Abstand der Markierung 30 von der Sensoreinrichtung 40 angibt, die Position des Fahrzeugs 20 innerhalb der Ladestation 10 sowohl in Fahrzeuglängsrichtung X als auch in Fahrzeugquerrichtung Y zu ermitteln. Ein einziges Messsignal ist also ausreichend, um eine zweidimensionale Ortsangabe für das Fahrzeug 20 innerhalb der Ladestation 10 zu erhalten.

Um das Erkennen der Markierung 30 bzw. das Erkennen des Einfahrens des Fahrzeugs 20 in den Bereich der Sensoreinrichtung 40 zu vereinfachen, wird es als vorteilhaft angesehen, wenn die Markierung 30 an ihrem - in Fahrzeuglängsrichtung gesehen - vorderen Ende eine Startsequenz SSQ oder zumindest ein Startmerkmal aufweist, anhand derer bzw. anhand dessen die Sensoreinrichtung 40 den Beginn des Vorbeifahrens der Markierung 30 besonders einfach erkennen kann. Bei dem Ausführungsbeispiel gemäß Figur 1 wird eine solche Startsequenz durch ein abruptes Ansteigen des Oberflächenprofils OP in Fahrzeug-Y-Richtung bzw. Fahrzeugquerrichtung sowie einen sich daran anschließenden relativ langen Abschnitt konstanten Oberflächenprofils gebildet.

Zur Ortung des Fahrzeugs 20 innerhalb der Ladestation 10 arbeiten die Sensoreinrichtung 40 der Ladestation 10 sowie die Markierung 30 des Fahrzeugs 20 zusammen und bilden gemeinsam ein Ortungssystem 100, das zur Bestimmung der Position des Fahrzeugs 20 in der Ladestation 10 geeignet ist.

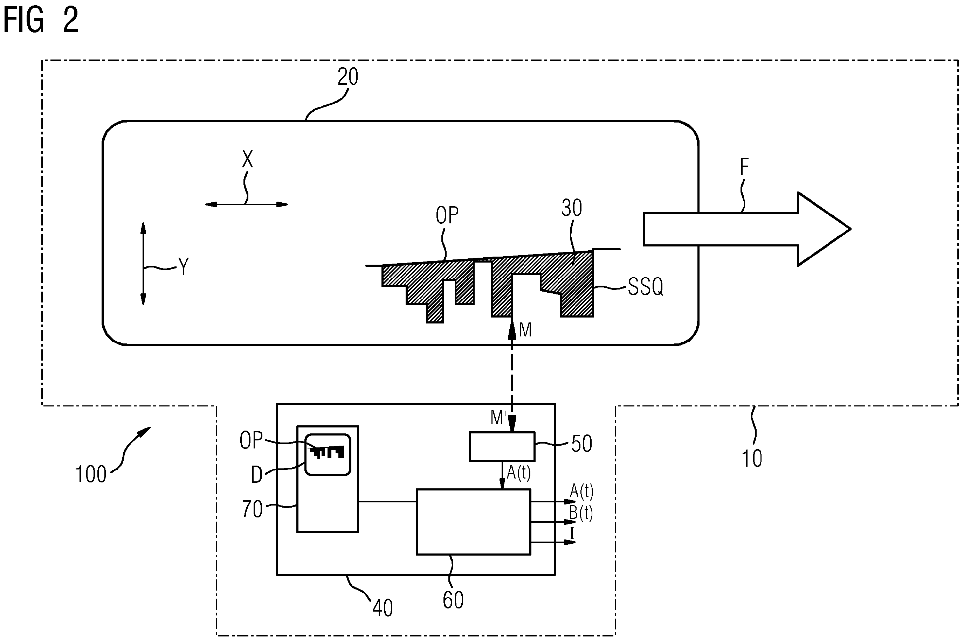

Mittels der sich in Fahrzeuglängsrichtung X ändernden Markierungseigenschaft - bei dem Ausführungsbeispiel gemäß Figur 1 also mittels des sich in Fahrzeuglängsrichtung X ändernden Oberflächenprofils OP - kann nicht nur eine Bestimmung des Fahrzeuglängsrichtungssignals B(t) mittels des Abstandssignals A(t) erfolgen, wie dies oben im Detail beschrieben worden ist, sondern zusätzlich auch eine Identifikation des Fahrzeugs 20 selbst. Zu diesem Zweck wird innerhalb des Oberflächenprofils OP der Markierung 30 vorzugsweise eine Fahrzeugcodierung implementiert, die von der Recheneinrichtung 60 beim Auslesen und Auswerten des Abstandssignals A(t) erkannt wird und zum Erzeugen eines Identifizierungssignals, das das jeweilige Fahrzeug 20 identifiziert, herangezogen wird. Die Figur 2 zeigt ein solches Ausführungsbeispiel für ein Ortungssystem 100, bei dem die Sensoreinrichtung 40 zusätzlich ein Identifizierungssignal I ausgibt, das mittels des Abstandssignals A(t) gewonnen worden ist und das Fahrzeug 20 identifiziert.

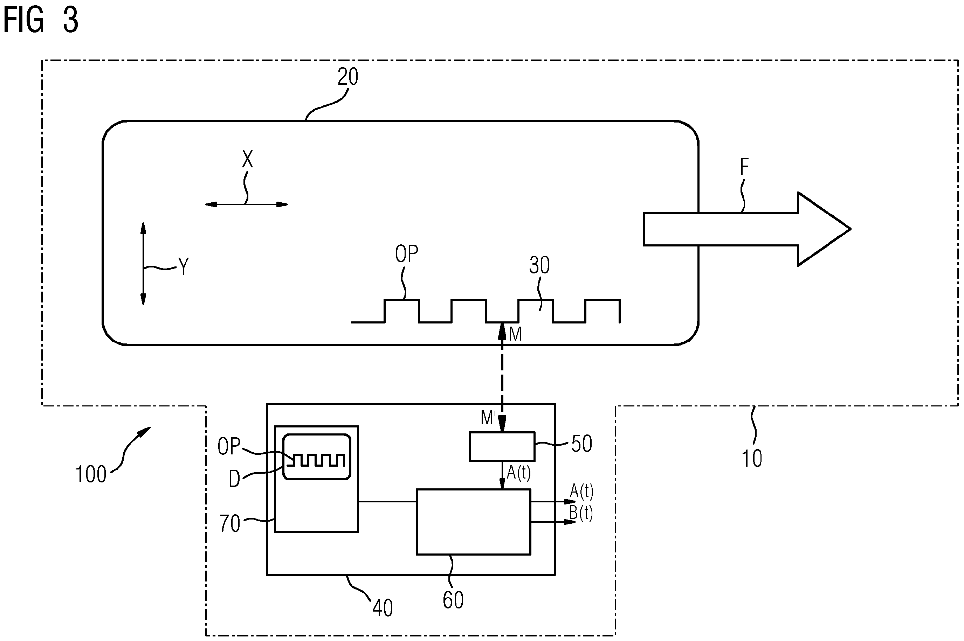

Die Figur 3 zeigt ein weiteres Ausführungsbeispiel für eine Ladestation 10, bei der eine Sensoreinrichtung 40 zur Ortung eines innerhalb der Ladestation 10 befindlichen Fahrzeugs 20 geeignet ist. Auch bei dem Ausführungsbeispiel gemäß Figur 3 bilden eine Sensoreinrichtung 40 der Ladestation 10 sowie eine Markierung 30 auf dem Fahrzeug 20 ein Ortungssystem 100, mit dem sich die Position des Fahrzeugs 20 innerhalb der Ladestation 10 bestimmen lässt.

Im Unterschied zu dem Ausführungsbeispiel gemäß Figur 1 ist das Oberflächenprofil OP der fahrzeugseitigen Markierung 30 einfacher gehalten; so ist in der Figur 3 erkennbar, dass die fahrzeugseitige Markierung 30 in Fahrzeugquerrichtung bzw. Fahrzeug-Y-Richtung gesehen lediglich zwei Profilhöhen aufweist, nämlich eine erste Profilhöhe, bei der die Oberfläche der Markierung 30 einen - verglichen mit der zweiten Profilhöhe - kleinen Abstand zum Sensor 50 der Sensoreinrichtung 40 aufweist, und eine zweite Profilhöhe, bei der die Oberfläche der Markierung 30 - verglichen mit der ersten Profilhöhe - einen großen Abstand zum Sensor 50 der Sensoreinrichtung 40 aufweist. Das Oberflächenprofil OP mit der Markierung 30 kann beispielsweise durch eine Loch- oder Schlitzblende gebildet sein.

Um eine Erkennung der Markierung 30 beim Vorbeifahren des Fahrzeugs 20 zu ermöglichen, ist in dem Speicher 70 der Sensoreinrichtung 40 gemäß Figur 3 vorzugsweise ein Datensatz D abgespeichert, der das Oberflächenprofil OP der Markierung 30 des Fahrzeugs 20 definiert.

Der Betrieb der Sensoreinrichtung 40 gemäß Figur 3 entspricht im Wesentlichen dem Betrieb der Sensoreinrichtung 40 gemäß Figur 1: Fährt das Fahrzeug 20 entlang der Fahrtrichtung F in die Ladestation 10 ein, so wird die Recheneinrichtung 60 anhand des zeitlichen Verlaufs des Abstandssignals A(t) das Auftreten der Markierung 30 erkennen, so dass sie - beispielsweise durch Abzählen der Profilstufen bzw. Profilsprünge - die Position des Messstrahls M auf dem Oberflächenprofil OP der Markierung 30 in Fahrzeuglängsrichtung bestimmen kann.

Mit anderen Worten ist auch bei dem Ausführungsbeispiel gemäß Figur 3 eine Bestimmung der Position der Markierung 30 in Fahrzeuglängsrichtung X allein anhand des Abstandssignals A(t) möglich, obwohl die Markierung 30 deutlich einfacher ausgestaltet ist als die Markierung gemäß der Figur 1 oder 2.

Die Sensoreinrichtung 40 kann das Abstandssignal A(t) sowie das Fahrzeuglängsrichtungssignal B(t) unmittelbar an ihrem Ausgang abgeben. Alternativ oder zusätzlich kann die Sensoreinrichtung 40 mittels des Abstandssignals A(t) und des Fahrzeuglängsrichtungssignals B(t) andere Ortungssignale ausgeben, die die Position des Fahrzeugs 20 innerhalb der Ladestation 10 mit Bezug auf andere Bezugspunkte des Fahrzeugs 20 als die Markierung 30 und/oder mit Bezug auf andere Referenzpunkte als die Position der Sensoreinrichtung 40 innerhalb der Ladestation 10 angeben.

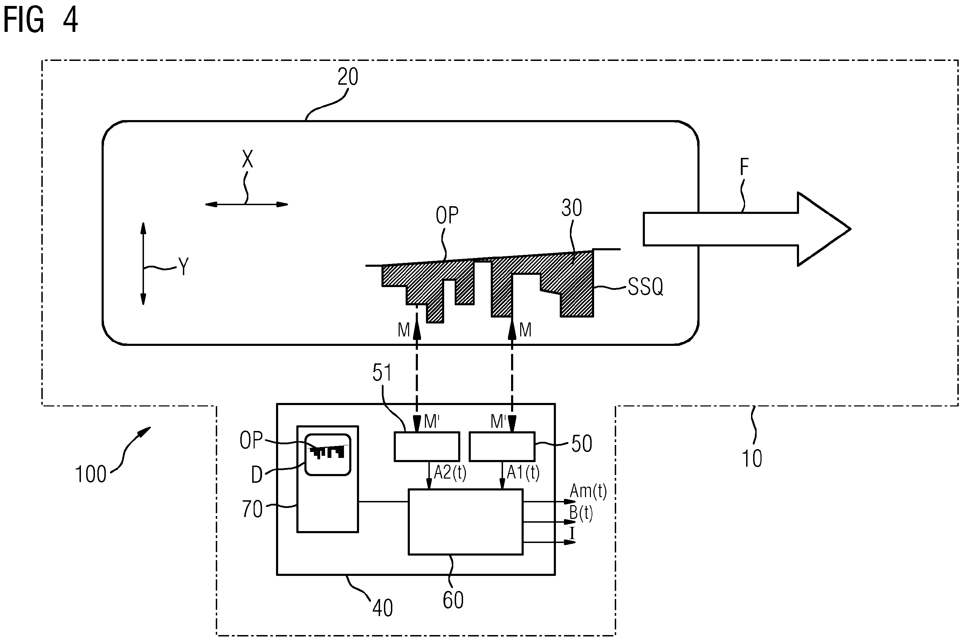

Die Figur 4 zeigt ein Ausführungsbeispiel für eine Ladestation 10, bei der eine Sensoreinrichtung 40 mit zwei Sensoren 50 und 51 ausgestattet ist, die von ihrer Funktion und Arbeitsweise den Sensoren 50 gemäß den Figuren 1 bis 3 entsprechen.

Die beiden Sensoren 50 und 51 erzeugen jeweils Messstrahlen M, empfangen jeweils Messstrahlen M' und sind jeweils in der Lage, ein Abstandssignal A1(t) bzw. A2(t) zu erzeugen, das den jeweiligen Abstand des Sensors 50 bzw. 51 von der fahrzeugseitigen Markierung 30 angibt.

Die beiden Abstandssignale A1(t) und A2(t) gelangen zu der Recheneinrichtung 60, die diese auswertet und anhand des Datensatzes D bzw. des darin abgespeicherten Oberflächenprofils OP in der Lage ist, eine Ortung des Fahrzeugs 20 sowohl in Fahrzeugquerrichtung Y (vorzugsweise in Form eines aus den beiden Abstandssignale A1(t) und A2(t) gemittelten Abstandssignals Am(t)) als auch in Fahrzeug-X-Richtung durchzuführen.

Eine Fehlmessung bzw. Fehllokalisierung des Fahrzeugs 20 kann bei der Sensoreinrichtung 40 gemäß Figur 4 in besonders einfacher Weise vermieden werden, da mittels der beiden Abstandssignale A1(t) und A2(t) zur Kontrolle zusätzlich eine Fahrtrichtungserkennung des Fahrzeugs 20 möglich ist; denn durch gleichzeitiges Auswerten der beiden Abstandssignale A1(t) und A2(t) lässt sich ohne weiteres erkennen, in welche Fahrtrichtung F sich das Fahrzeug 20 zu jedem Zeitpunkt bewegt. Kommt es nach dem Einfahren des Fahrzeugs 20 in die Ladestation 10 - aus welchen Gründen auch immer - nach einem Fahrzeugstillstand zu einer Rückwärtsfahrt, so kann dies von der Sensoreinrichtung 40 erkannt und zur Korrektur des Fahrzeuglängsrichtungssignals B(t) herangezogen werden.

Insbesondere bei Bussen des öffentlichen Nahverkehrs ist es nicht unüblich, dass das Fahrzeug bei Stillstand abgesenkt und/oder gekippt wird, um das Ein- und Aussteigen von Passagieren zu vereinfachen. Um auch im Falle eines solchen Absenkens oder Kippens des Fahrzeugs ein zuverlässiges Erkennen und Auslesen der Markierung 30 zu ermöglichen, wird es als vorteilhaft angesehen, wenn die Oberflächentopologie der Markierung 30 um eine Biegeachse, die der Fahrzeuglängsachse X entspricht oder parallel zur Fahrzeuglängsachse X liegt, gebogen ist. Durch eine solche Biegung bzw. Wölbung der Oberflächentopologie bzw. des Oberflächenprofils OP der Markierung 30 lässt sich eine korrekte Erfassung der Markierung 30 auch im Falle eines Absenkens oder Kippens des Fahrzeugs sicherstellen.

Darüber hinaus ist es möglich, neben den in den Figuren 1 bis 4 dargestellten Sensoren 50 und 51 weitere Sensoren vorzusehen, die vertikal versetzt angeordnet sind und somit eine Detektion der Markierung 30 auch dann gewährleisten können, wenn die vertikale Positionierung der Markierung 30 auf dem Fahrzeug 20 anders als erwartet ist oder beispielsweise beim Absenken oder Kippen des Fahrzeugs 20 bei Stillstand verändert wird.

Die Ladestation 10 gemäß den Figuren 1 bis 4 ist neben der im Detail beschriebenen Sensoreinrichtung 40 mit den üblichen Ladekomponenten ausgestattet, mit denen sich ein Energiespeicher der Fahrzeuge 10 aufladen lässt. Solche Ladekomponenten werten die Positionsangaben der Sensoreinrichtung 40 für den Ladebetrieb aus und sind der Übersicht halber in den Figuren 1 bis 4 nicht dargestellt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Ortungssystem (100) zur Bestimmung der Position eines Fahrzeugs (20) beim Einfahren in eine Ladestation (10), die zum Aufladen eines Energiespeichers des Fahrzeugs (20) geeignet ist,
wobei
- das Ortungssystem (100) fahrzeugseitig eine Markierung (30) aufweist, bei der sich zumindest eine Markierungseigenschaft in Fahrzeuglängsrichtung (X) ändert, und
- die Ortungseinrichtung streckenseitig eine Sensoreinrichtung (40) aufweist, die - beim Vorbeifahren des Fahrzeugs (20) an der Sensoreinrichtung (40) -
- den Abstand der Markierung (30) von der Sensoreinrichtung (40) misst und ein Abstandssignal (A(t)) erzeugt, das den Abstand der Markierung (30) von der Sensoreinrichtung (40) in Fahrzeugquerrichtung (Y) angibt, und
- die Markierungseigenschaft in Fahrzeuglängsrichtung (X) ausliest und ein Fahrzeuglängsrichtungssignal (B(t)) erzeugt, das die Position der Markierung (30) und/oder des Fahrzeugs (20) relativ zur Sensoreinrichtung (40) in Fahrzeuglängsrichtung (X) angibt, wobei:
- die fahrzeuglängsrichtungsabhängige Markierungseigenschaft durch das Oberflächenprofil (OP) der Markierung (30) in Fahrzeugquerrichtung (Y) bestimmt wird und
- das Fahrzeuglängsrichtungssignal (B(t)) durch Auswertung des Abstandssignals (A(t)) erzeugt wird, wobei das Oberflächenprofil der Markierung (30) in Fahrzeugquerrichtung (Y) entlang der Fahrzeuglängsrichtung (X) eine Höhenkodierung aufweist, anhand derer die Position der Markierung (30) in Fahrzeuglängsrichtung (X) relativ zur Sensoreinrichtung (40) feststellbar ist und **dadurch gekennzeichnet, dass** das Oberflächenprofil der Markierung (30) um eine Biegeachse, die der Fahrzeuglängsachse entspricht oder parallel zur Fahrzeuglängsachse liegt, gebogen ist, so dass sich eine korrekte Erfassung der Markierung (30) auch im Falle eines Absenkens oder Kippens des Fahrzeugs sicherstellen lässt.

2. Ortungssystem (100) nach dem voranstehenden Anspruch,
**dadurch gekennzeichnet, dass**
die fahrzeuglängsrichtungsabhängige Markierungseigenschaft der Markierung (30) an dem in Vorwärtsfahrtrichtung des Fahrzeugs (20) gesehen vorderen Markierungsende ein Startmerkmal oder eine Startsequenz (SSQ) aufweist, anhand derer die Sensoreinrichtung (40) den Beginn des Vorbeifahrens der Markierung (30) erkennt.

3. Ortungssystem (100) nach einem der voranstehenden Ansprüche,
**dadurch gekennzeichnet, dass**
die Markierung (30) durch eine Loch- und/oder Schlitzblende, die ein oder mehrere Löcher und/oder Schlitze enthält, gebildet ist oder eine solche Loch- und/oder Schlitzblende zumindest auch enthält.

4. Ortungssystem (100) nach einem der voranstehenden Ansprüche,
**dadurch gekennzeichnet, dass**
- die Markierung (30) eine Kodierung aufweist, die das Fahrzeug (20) identifiziert, und
- die Sensoreinrichtung (40) anhand der Kodierung das Fahrzeug (20) durch Auswertung des Abstandssignals (A(t)) erkennt.

5. Ortungssystem (100) nach einem der voranstehenden Ansprüche,
**dadurch gekennzeichnet, dass**
die Sensoreinrichtung (40) eine berührungslos arbeitende Sensoreinrichtung (40) ist.

6. Ortungssystem (100) nach einem der voranstehenden Ansprüche,
**dadurch gekennzeichnet, dass**
die Sensoreinrichtung (40) optisch, induktiv, magnetisch und/oder kapazitiv arbeitet.

7. Ortungssystem (100) nach einem der voranstehenden Ansprüche,
**dadurch gekennzeichnet, dass**
die Sensoreinrichtung (40) den Abstand zwischen der Markierung (30) und der Sensoreinrichtung (40) mittels eines Triangulationsverfahrens, insbesondere eines Lasertriangulationsverfahrens, oder mittels eines Strahlungslaufzeitverfahrens bestimmt.

8. Fahrzeug (20), das zumindest auch einen Elektroantrieb und einen Energiespeicher aufweist, der über eine Ladestation (10) aufladbar ist, wobei
das Fahrzeug (20) eine fahrzeugseitige Markierung (30) mit einer fahrzeuglängsrichtungsabhängigen Markierungseigenschaft aufweist, anhand derer ein Fahrzeuglängsrichtungssignal (B(t)), das die Position der Markierung (30) und/oder des Fahrzeugs (20) relativ zu einer Sensoreinrichtung (40) der Ladestation (10) in Fahrzeuglängsrichtung (X) angibt, und ein Abstandssignal (A(t)), das den Abstand der Markierung (30) und/oder des Fahrzeugs (20) von der Sensoreinrichtung (40) in Fahrzeugquerrichtung (Y) angibt, erzeugt werden kann, wobei die fahrzeuglängsrichtungsabhängige Markierungseigenschaft durch das Oberflächenprofil (OP) der Markierung (30) in Fahrzeugquerrichtung (Y) bestimmt wird, wobei das Oberflächenprofil der Markierung (30) in Fahrzeugquerrichtung (Y) entlang der Fahrzeuglängsrichtung (X) eine Höhenkodierung aufweist, anhand derer die Position der Markierung (30) in Fahrzeuglängsrichtung (X) relativ zur Sensoreinrichtung (40) feststellbar ist und **dadurch gekennzeichnet, dass** das Oberflächenprofil der Markierung (30) um eine Biegeachse, die der Fahrzeuglängsachse entspricht oder parallel zur Fahrzeuglängsachse liegt, gebogen ist, so dass sich eine korrekte Erfassung der Markierung (30) auch im Falle eines Absenkens oder Kippens des Fahrzeugs sicherstellen lässt.

9. Verfahren zum Bestimmen der Position eines Fahrzeugs (20) nach Anspruch 8 beim Einfahren in eine Ladestation (10), die zum Aufladen eines Energiespeichers des Fahrzeugs (20) geeignet ist,
**dadurch gekennzeichnet, dass**
- beim Vorbeifahren des Fahrzeugs (20) an einer Sensoreinrichtung (40) der Ladestation (10) der Abstand einer fahrzeugseitigen Markierung (30) von der Sensoreinrichtung (40) der Ladestation (10) in Fahrzeugquerrichtung (Y) gemessen wird und ein Abstandssignal (A(t)) erzeugt wird, das den Abstand der Markierung (30) und/oder des Fahrzeugs (20) von der Sensoreinrichtung (40) der Ladestation (10) in Fahrzeugquerrichtung (Y) angibt, und
- eine fahrzeuglängsrichtungsabhängige Markierungseigenschaft der fahrzeugseitigen Markierung (30) ausgelesen wird und ein Fahrzeuglängsrichtungssignal (B(t)) erzeugt wird, das die Position der Markierung (30) und/oder des Fahrzeugs (20) relativ zur Sensoreinrichtung (40) der Ladestation (10) in Fahrzeuglängsrichtung (X) angibt,
- die fahrzeuglängsrichtungsabhängige Markierungseigenschaft durch das Oberflächenprofil (OP) der Markierung (30) in Fahrzeugquerrichtung (Y) bestimmt wird und
- das Fahrzeuglängsrichtungssignal (B(t)) durch Auswertung des Abstandssignals (A(t)) erzeugt wird.

## Claims

1. Positioning system (100) for determining the position of a vehicle (20) as it enters a charging station (10), which is suitable for charging an energy accumulator of the vehicle (20),
wherein
- the positioning system (100) has a vehicle-side marking (30), in which at least one marking property changes in the vehicle longitudinal direction (X), and
- the positioning device has, on the route side, a sensor device (40) which - as the vehicle (20) travels past the sensor device (40) -
- measures the distance of the marking (30) from the sensor device (40) and generates a distance signal (A(t)), which indicates the distance of the marking (30) from the sensor device (40) in the vehicle transverse direction (Y), and
- reads out the marking property in the vehicle longitudinal direction (X) and generates a vehicle longitudinal direction signal (B(t)), which indicates the position of the marking (30) and/or the vehicle (20) in relation to the sensor device (40) in the vehicle longitudinal direction (X),
wherein:
- the marking property, which is dependent on the vehicle longitudinal direction, is determined by the surface profile (OP) of the marking (30) in the vehicle transverse direction (Y) and
- the vehicle longitudinal direction signal (B(t)) is generated by analyzing the distance signal (A(t)),
wherein
the surface profile of the marking (30) in the vehicle transverse direction (Y) has a height coding along the vehicle longitudinal direction (X), on the basis of which the position of the marking (30) can be determined in the vehicle longitudinal direction (X) in relation to the sensor device (40) and
**characterized in that** the surface profile of the marking (30) is bent about a bending axis, which corresponds to the vehicle longitudinal axis or is parallel to the vehicle longitudinal axis, so that a correct acquisition of the marking (30) may also be ensured in the case of lowering or tilting of the vehicle.

2. Positioning system (100) according to the preceding claim, **characterized in that** the marking property, which is dependent on the vehicle longitudinal direction, of the marking (30) has, at the front marking end viewed in the forward travel direction of the vehicle (20), a starting feature or a starting sequence (SSQ), on the basis of which the sensor device (40) recognizes the beginning of the marking (30) traveling past.

3. Positioning system (100) according to either of the preceding claims,
**characterized in that** the marking (30) is formed by a perforated and/or slotted screen, which contains one or more holes and/or slots, or at least also contains such a perforated and/or slotted screen.

4. Positioning system (100) according to any one of the preceding claims,
**characterized in that**
- the marking (30) has a coding, which identifies the vehicle (20), and
- the sensor device (40) recognizes the vehicle (20) on the basis of the coding by analyzing the distance signal (A(t)).

5. Positioning system (100) according to any one of the preceding claims,
**characterized in that** the sensor device (40) is a sensor device (40) which operates in a contactless manner.

6. Positioning system (100) according to any one of the preceding claims,
**characterized in that** the sensor device (40) operates optically, inductively, magnetically, and/or capacitively.

7. Positioning system (100) according to any one of the preceding claims,
**characterized in that** the sensor device (40) determines the distance between the marking (30) and the sensor device (40) by means of a triangulation method, in particular a laser triangulation method, or by means of a radiation runtime method.

8. Vehicle (20), which also has at least one electric drive and an energy accumulator which is chargeable via a charging station (10), wherein
the vehicle (20) has a vehicle-side marking (30) with a marking property which is dependent on the vehicle longitudinal direction, on the basis of which a vehicle longitudinal direction signal (B(t)), which indicates the position of the marking (30) and/or the vehicle (20) in relation to a sensor device (40) of the charging station (10) in the vehicle longitudinal direction (X), and a distance signal (A(t)), which indicates the distance of the marking (30) and/or the vehicle (20) from the sensor device (40) in the vehicle transverse direction (Y), can be generated,
wherein
- the marking property, which is dependent on the vehicle longitudinal direction, is determined by the surface profile (OP) of the marking (30) in the vehicle transverse direction (Y), wherein
the surface profile of the marking (30) in the vehicle transverse direction (Y) has a height coding along the vehicle longitudinal direction (X), on the basis of which the position of the marking (30) can be determined in the vehicle longitudinal direction (X) in relation to the sensor device (40) and
**characterized in that** the surface profile of the marking (30) is bent about a bending axis, which corresponds to the vehicle longitudinal axis or is parallel to the vehicle longitudinal axis, so that a correct acquisition of the marking (30) may also be ensured in the case of lowering or tilting of the vehicle.

9. Method for determining the position of a vehicle (20) according to Claim 8 as it enters a charging station (10), which is suitable for charging an energy accumulator of the vehicle (20),
**characterized in that**
- as the vehicle (20) travels past a sensor device (40) of the charging station (10), the distance of a vehicle-side marking (30) from the sensor device (40) of the charging station (10) in the vehicle transverse direction (Y) is measured and a distance signal (A(t)) is generated, which indicates the distance of the marking (30) and/or the vehicle (20) from the sensor device (40) of the charging station (10) in the vehicle transverse direction (Y), and
- a marking property, which is dependent on the vehicle longitudinal direction, of the vehicle-side marking (30) is read out and a vehicle longitudinal direction signal (B(t)) is generated, which indicates the position of the marking (30) and/or the vehicle (20) in relation to the sensor device (40) of the charging station (10) in the vehicle longitudinal direction (X),
- the marking property, which is dependent on the vehicle longitudinal direction, is determined by the surface profile (OP) of the marking (30) in the vehicle transverse direction (Y) and
- the vehicle longitudinal direction signal (B(t)) is generated by analyzing the distance signal (A(t)).

## Revendications

1. Système (100) de localisation pour déterminer la position d'un véhicule (20) lorsqu'il entre dans un poste (10) de charge propre à charger un accumulateur d'énergie du véhicule (20),
dans lequel
- le système (100) de localisation a, du côté du véhicule, un repère (30), dans lequel au moins une propriété du repère change dans la direction (X) longitudinale du véhicule et
- le dispositif de localisation a, du côté de la voie, un dispositif (40) de capteur, qui - lorsque le véhicule (20) passe devant le dispositif (40) de capteur -
- mesure la distance du repère (30) au dispositif (40) de capteur et produit un signal (A(t)) de distance, qui indique la distance du repère au dispositif (40) de capteur dans la direction (Y) transversale du véhicule et
- lit la propriété du repère dans la direction (X) longitudinale du véhicule et produit un signal (B(t)) de direction longitudinale du véhicule, qui indique la position du repère (30) et/ou du véhicule (20) par rapport au dispositif (40) de capteur dans la direction (X) longitudinale du véhicule,
dans lequel :
- la propriété du repère, qui varie dans la direction longitudinale du véhicule, est déterminée par le profil (OP) de surface du repère (30) dans la direction (Y) transversale du véhicule et
- le signal (B(t)) de direction longitudinal du véhicule est produit en exploitant le signal (A(t)) de distance, le profil de surface du repère (30), dans la direction (Y) transversale du véhicule, ayant, le long de la direction (X) longitudinale du véhicule, un codage en hauteur à l'aide duquel la position du repère (30), dans la direction (X) longitudinale du véhicule, par rapport au dispositif (40) de capteur, peut être constatée et **caractérisé en ce que** le profil de surface du repère (30) est courbé autour d'un axe de courbure, qui correspond à l'axe longitudinal du véhicule ou qui est parallèle à l'axe longitudinal du véhicule, de manière à pouvoir assurer une détection correcte du repère (30), même dans le cas d'un abaissement ou d'un basculement du véhicule.

2. Système (100) de localisation suivant la revendication précédente,
**caractérisé en ce que**
la propriété, qui varie dans la direction en longueur du véhicule, du repère (30) a, à l'extrémité avant du repère, considéré dans le sens de marche, en avant du véhicule (20), une caractéristique initiale ou une séquence (SSQ) initiale à l'aide de laquelle le dispositif (40) de capteur reconnaît le début du passage du repère (30).

3. Système (100) de localisation suivant l'une des revendications précédentes,
**caractérisé en ce que**
le repère (30) est formé par un diaphragme à trous et/ou à fentes, qui contient un trou ou plusieurs trous et/ou fentes ou comporte au moins aussi un diaphragme à trous et/ou à fentes de ce genre

4. Système (100) de localisation suivant l'une des revendications précédentes,
**caractérisé en ce que**
- le repère (30) a un codage, qui identifie le véhicule (20) et
- le dispositif (40) de capteur reconnaît, à l'aide du codage, le véhicule (20) en exploitant le signal (A(t)) de distance.

5. Système (100) de localisation suivant l'une des revendications précédentes,
**caractérisé en ce que**
le dispositif (40) de capteur est un dispositif (40) de capteur fonctionnant sans contact.

6. Système (100) de localisation suivant l'une des revendications précédentes,
**caractérisé en ce que** le dispositif (40) de capteur travaille de manière optique, inductive, magnétique et/ou capacitive.

7. Système (100) de localisation suivant l'une des revendications précédentes,
**caractérisé en ce que**
le dispositif (40) de capteur détermine la distance entre le repère (30) et le dispositif (40) de capteur au moyen d'un procédé de triangulation, notamment d'un procédé de triangulation par laser, ou au moyen d'un procédé de temps de propagation d'un rayonnement.

8. Véhicule (20), qui a au moins également une propulsion électrique et un accumulateur d'énergie pouvant être chargé par un poste (10) de charge, dans lequel
le véhicule (20) a un repère (30) du côté du véhicule, ayant une propriété de repère, qui varie dans la direction longitudinale du véhicule et à l'aide de laquelle il peut être produit un signal (B(t)) de direction longitudinale du véhicule, qui indique la position du repère (30) et/ou du véhicule (20) par rapport à un dispositif (40) de capteur du poste (10) de charge dans la direction (X) longitudinale du véhicule, et un signal (A(t)) de distance, qui indique la distance du repère (30) et/ou du véhicule (20) au dispositif (40) de capteur dans la direction (Y) transversale du véhicule,
dans lequel
la propriété du repère la propriété du repère, qui varie dans la direction longitudinale du véhicule, est déterminée par le profil (OP) de surface du repère (30) dans la direction (Y) transversale du véhicule et
le signal (B(t)) de direction longitudinal du véhicule est produit en exploitant le signal (A(t)) de distance, le profil de surface du repère (30), dans la direction (Y) transversale du véhicule, ayant, le long de la direction (X) longitudinale du véhicule, un codage en hauteur à l'aide duquel la position du repère (30), dans la direction (X) longitudinale du véhicule, par rapport au dispositif (40) de capteur, peut être constatée et **caractérisé en ce que** le profil de surface du repère (30) est courbé autour d'un axe de courbure, qui correspond à l'axe longitudinal du véhicule ou qui est parallèle à l'axe longitudinal du véhicule, de manière à pouvoir assurer une détection correcte du repère (30), même dans le cas d'un abaissement ou d'un basculement du véhicule.

9. Procédé de détermination de la position d'un véhicule (20) suivant la revendication 8 lors de l'entrée dans un poste (10) de charge propre à charger un accumulateur d'énergie du véhicule (20),
**caractérisé en ce que**
- lorsque le véhicule (20) passe devant un dispositif (40) de capteur du poste (10) de charge, on mesure la distance d'un repère (30), du côté du véhicule au dispositif (40) de capteur du poste (10) de charge, dans la direction (Y) transversale du véhicule et on produit un signal (A(t)) de distance, qui indique la distance du repère (30) et/ou du véhicule (20) au dispositif (40) de capteur du poste (10) de charge dans la direction (Y) transversale du véhicule et
- on lit une propriété du repère (30) du côté du véhicule, qui varie suivant la direction longitudinale du véhicule, et on produit un signal (B(t)) de direction longitudinale du véhicule, qui indique la position du repère (30) et/ou du véhicule (20) par rapport au dispositif (40) de capteur du poste (10) de charge dans la direction (X) longitudinale du véhicule,
- on détermine la propriété du repère, qui varie dans la direction longitudinale du véhicule, par le profil (OP) de surface du repère (30) dans la direction (Y) transversale du véhicule et
- on produit le signal (B(t)) de direction longitudinale du véhicule en exploitant le signal (A(t)) de distance.
